# EUROPEAN PATENT SPECIFICATION

(11) **EP 4 407 367 B1**
(45) Date of publication and mention of the grant of the patent: **03.12.2025**
(21) Application number: 23153468.6
(22) Date of filing: 26.01.2023
(51) Int. Cl.: G02F 1/39, G02F 1/01, G02F 1/35, G02F 1/09, G02B 27/09

(54) **METHOD AND SYSTEM FOR STABILIZATION OF A LASER BEAM FOR AN ENTANGLED PHOTON SOURCE**
VERFAHREN UND SYSTEM ZUR STABILISIERUNG EINES LASERSTRAHLS FÜR EINE VERSCHRÄNKTE PHOTONENQUELLE
PROCÉDÉ ET SYSTÈME DE STABILISATION D'UN FAISCEAU LASER POUR UNE SOURCE DE PHOTONS ENCHEVÊTRÉE

(43) Date of publication of application: 31.07.2024
(73) Proprietor: Quantum Industries GmbH, 1100 Vienna (AT); Quantum Technology Laboratories GmbH, 1100 Vienna (AT)
(72) Inventor: BULLA, Lukas, 1160 Vienna (AT); NEUMANN, Sebastian Philipp, 1090 Vienna (AT)
(74) Representative: Meissner Bolte Partnerschaft mbB

(56) References cited:
- EP-A1- 3 754 396
- WO-A1-2020/143927
- WO-A1-2022/165134
- CN-A- 105 391 547
- CN-A- 108 984 153
- US-A- 5 136 600
- US-A1- 2010 141 857
- US-A1- 2018 292 728
- US-B2- 11 343 001
- SEBASTIAN ECKER ET AL: "Overcoming Noise in Entanglement Distribution", ARXIV.ORG, CORNELL UNIVERSITY LIBRARY, 201 OLIN LIBRARY CORNELL UNIVERSITY ITHACA, NY 14853, 2 April 2019 (2019-04-02), XP081543628, DOI: 10.1103/PHYSREVX.9.041042
- NATALIA HERRERA VALENCIA ET AL: "Unscrambling Entanglement through a Complex Medium", ARXIV.ORG, CORNELL UNIVERSITY LIBRARY, 201 OLIN LIBRARY CORNELL UNIVERSITY ITHACA, NY 14853, 10 October 2019 (2019-10-10), XP081513486

## Description

The present invention provides a method for stabilization of a pump beam for an entangled photon source according to the preamble of claim 1 and a system for stabilization of a pump beam for an entangled photon source according to the preamble of claim 13.

As of today, the most efficient method of preparing entangled photons is via spontaneous parametric down-conversion (SPDC) which occurs in highly birefringent non-linear crystals. In order to generate entangled photons by spontaneous parametric down-conversion (SPDC) the non-linear crystal is pumped by a pump laser. While there are many different possibilities to fabricate and align such crystals, they all have in common that they require a pump laser with well-defined properties, such as operating mode (continuous wave or pulsed), polarization, power and wavelength.

Known stabilization schemes for lasers aim for the stabilization of the wavelength, which is vital for interferometric applications but is not directed at a constant generation rate and quality of entangled photon pairs.

From EP 3 754 396 A1 a method to align an entangled photon source is known. From US 2010/0141857 A1 an optical waveform shaping device is known. From CN 105 391 547 A a Mach-Zehnder type orbit angular momentum key distribution method is known. From WO 2022/165134 A1 a bichromatic entangled photon source is known with wavelength locked lasers. From US 5136600 A a wavelength stabilized superfluorescent fiber source is known. From US 2018/292728 A1 a tunable bi-photon source arranged in a Mach-Zehnder Interferometer with phase locking is known. From "Overcoming Noise in Entanglement Distribution" S. Ecker et. al. arXiv:1904.01552 (2019) a method for entanglement distribution is known with phase locked Mach-Zehnder interferometer measurement setups.

It is an object of the present invention to provide an improved method and system for stabilization of a laser beam for an entangled photon source.

According to the present invention, a method of stabilization of a pump laser in an entangled photon source is provided according to claim 1.

This object is achieved by a method of stabilization of a pump beam for an entangled photon source, and preferably for stabilization of the pump beam for the generation of entangled photons, with the steps
i) generation of a polarized pump beam by a pump laser;
ii) generation of entangled photons in the source by pumping a non-linear element in the source with the pump beam.

According to the invention the method comprises the steps
iii) measurement of the pump beam after the generation of the entangled photons by splitting up the pump beam into two part-pump beams with orthogonal polarizations in a polarizing monitoring means and detection of the two part-pump beams by two detection means after the generation of the entangled photons;
iv) generation of a control signal based on the sum of the two part-pump beams or on the ratio of the two part-pump beams in a control means;
v) adjustment of the pump laser, or one or more polarization adjustment means arranged between the pump laser and the source by the control signal in order to stabilize the power or the polarization of the pump beam, wherein the control signal of the ratio of the two part-pump beams is used for the adjustment of the polarization of the pump beam, and wherein the control signal of the sum of the two part-pump beams is used for the adjustment of the power of the pump beam.

According to the present invention, a system of stabilization of a pump laser in an entangled photon source is provided according to claim 13.

The object is further achieved by a system for stabilization of a pump beam in an entangled photon source, and preferably for stabilization of the pump beam for the generation of entangled photons, comprising a pump laser generating a polarized pump beam and a source,
whereby the source is arranged behind the pump laser and comprises a non-linear element for the generation of entangled photons.

According to the invention, the system comprises a polarizing monitoring means arranged between the pump laser and the source or behind the source, whereby the polarizing means comprises two output ports for splitting up the pump beam after the generation of the entangled photons into two part-pump beams with orthogonal polarizations, and
the system comprises two detection means, arranged behind the two output ports of the polarizing monitoring means, and
the system comprises a control means for controlling the power or the polarization of the pump beam, whereby a control loop is formed by the pump laser as actuation means, or by one or more polarization adjustment means as actuation means, and the polarizing monitoring means, and the detection means, and the control means,
whereby the polarization adjustment means is arranged between the pump laser and the source.

An advantage of the inventive method and inventive system is the automated stabilization of the power and/or the polarization of the pump laser leading to a stable generation of entangled photons with constant quality properties. This is realized by monitoring the pump beam after the generation of entangled photons. After the generation of the entangled photons means, that the pump beam is first used to pump the non-linear element for the generation of the entangled photons and in a second step the pump beam is split up into the two part-pump beams. The splitting up can be realized behind the source by a transmitted pump beam through the source or between the source and the pump laser by a in the source reflected or guided pump beam. Thus, by the inventive method and the inventive system it is not necessary to measure the generated entangled photons to check and stabilize the source and the properties of the entangled photons, but by monitoring the pump beam after the entangled photon generation. This eliminates the need to interrupt the entangled photon generation and key generation by quantum key distribution (QKD) for maintenance and adjustment purposes.

The power as well as the polarization is a crucial property of the pump beam which influences both the number of generated entangled photons and the state of the entangled photons.

In a preferred embodiment, the control signal is an electrical signal, preferably whose magnitude is proportional to the measured sum and/or ratio of the two part-pump beams.

In a preferred embodiment, the steps i) to v) form a control at or during the generation of the entangled photons by pumping the non-linear element by the pump beam.

In a preferred embodiment, the control comprises
a) the generation of a pump beam in step i),
b) the measurement of the pump beam in step iii) after the generation of the entangled photon pairs in step ii),
c) the generation of a control signal based on the sum of the two part-pump beams and/or on the ratio of the two part-pump beams in step iv), and
d) the adjustment of the pump laser and/or one or more adjustment-polarizing means by the control signal in step v).

In a preferred embodiment, the control means in step iv) compares the actual value of the sum of the two part-pump beams and/or the ratio of the two part-pump beams with a setpoint sum value and/or a setpoint ratio value and the control means determines and generates the control signal on the basis of the comparison.

In a preferred embodiment, the setpoint sum value and/or the setpoint ratio value are set manually or are set by properties defined by a first adjustment of the entangled photon source.

In a preferred embodiment, the control loop is permanently active. The advantage of the invention is that the control loop can be permanently active while generating entangled photons. An interruption of the generation of the entangled photons for adjustment or maintenance is not necessary.

In a preferred embodiment, the control loop can be deactivated at least temporarily or periodically. In order to check the power and/or the polarization of the pump beam, the control loop can be switched on again periodically for a certain time.

In a preferred embodiment, the control means is formed as a digital controller or as an analog circuit.

In a preferred embodiment, the two detection means generate a detection signal each in step iii). In a preferred embodiment, each detection signal is dependent or proportional to the intensity of one out of the two part-pump beams each. In a preferred embodiment, the control signal is generated by the sum or the ratio of the two detection signals of the two detection means. Thus, by generation of the control signal based on the sum of the two part-pump beams and/or on the ratio of the two part-pump beams in step iv) means that the control signal is generated based on the detection signals of the two part-pump beams from the detection means. For example, the intensity of the two part-pump beams is detected, whereby the detection signal in the detection means is proportional to the intensity of the two part-pump beams, leading to a detection signal proportional to the intensity of the two part-pump beams.

In a preferred embodiment, the detection means is a power meter, and/or a polarimeter, and/or a photodiode, and/or a thermal sensor.

In a preferred embodiment, the pump beam is split up in the polarizing monitoring means after a transmission of the pump beam through the source. In this embodiment, the polarizing monitoring means is arranged behind the source.

In a preferred embodiment, the pump beam is split up in the polarizing monitoring means after a reflection of the pump beam in the source or a guidance back of the pump beam in the source towards the pump laser. In this embodiment, the polarizing monitoring means is arranged between the pump laser and the source.

In a preferred embodiment, for the arrangement of the polarizing means between the pump laser and the source the pump beam is guided in the source back to the pump laser, preferably on the same spatial mode out of the source. This can be realized by a reflection or guidance of the pump beam in the source or a loop configuration for the pump beam in the source, preferably a Sagnac-loop configuration.

In a preferred embodiment, the polarizing monitoring means comprises one or more polarizing beam splitter, and/or one or more isolator. In an embodiment with multiple elements of the polarizing monitoring means the polarization rotation elements can be arranged between the multiple elements of the polarizing monitoring means in order to enable two orthogonal output ports.

In a preferred embodiment, the two orthogonal polarizations of the two part-pump beams can be the horizontal linear polarization and the vertical linear polarization, or the 45° linear polarization and the -45° linear polarization.

The actuation means is the part of the control loop which possesses the physical variable to be controlled and on which the control means act, preferably in step v), via the control signal. The actuation means of the inventive method and system is the pump laser and/or the polarization adjustment means arranged between the pump laser and the source. The physical variable may be the electrical power for the pump laser, or the temperature, or a position of a grating in the pump laser, or a position and/or angle setting of a fiber coupler, or a polarization setting position of the polarization adjustment means or an electrical power of the polarization adjustment means, for example for liquid crystals or motorized wave plates.

In a preferred embodiment, the adjustment of the polarization of the pump beam is realized by the control of the pump laser. In a preferred embodiment, the electrical power for the pump laser, or the temperature, or a position of a grating in the pump laser is controlled in order to adjust the polarization of the pump beam.

In a preferred embodiment, the adjustment of the polarization of the pump beam is realized by the control of one or more polarization adjustment means arranged between the pump laser and the source. In a preferred embodiment, the polarization rotation by the polarization adjustment means is controlled in order to adjust the polarization of the pump beam. In that embodiment, the polarization adjustment means is arranged in front of the source. Preferably there is no additional polarization changing optical element arranged between the polarization adjustment means and the source.

In a preferred embodiment, the adjustment of the power of the pump beam is realized by the control of the pump laser. In a preferred embodiment, the electrical power for the pump laser, or the temperature, or a position of a grating in the pump laser is controlled in order to adjust the power of the pump beam.

In a preferred embodiment, the adjustment of the power of the pump beam is realized by the control of the polarization adjustment means arranged between the pump laser and the source. In that embodiment, the polarization adjustment means is arranged in front of a polarizing element. By changing the polarization of the pump beam in front of the polarizing element the power of the transmitted pump beam through the polarizing element is adjusted.

In a preferred embodiment, the adjustment of the power of the pump beam is realized by the control of multiple polarization adjustment means arranged between the pump laser and the source. In that embodiment, at least a first polarization adjustment means is arranged in front of a first polarizing element and at least a second polarization adjustment means is arranged behind the first polarizing element and in front of a second polarizing element. The advantage of this embodiment is that output modes of the first and second polarizing element can be used at the same time as the monitoring means arranged between the source and the pump laser.

In a preferred embodiment, the polarizing element is a polarizing beam splitter, and/or a polarizer, and/or an isolator.

In a preferred embodiment, the polarization adjustment means is one or more motorized wave plates, and/or one or more motorized fiber paddles, and/or one or more motorized fiber squeezers, and/or one or more liquid crystals.

In a preferred embodiment, the adjustment of the power and of the polarization of the pump beam is realized by control of multiple polarization adjustment means arranged between the pump laser and the source. In that embodiment, at least a first polarization adjustment means is arranged between the pump laser and a polarizing element and at least a second polarization adjustment means is arranged behind the polarizing element. By changing the polarization of the pump beam in front of the polarizing element by the first polarization adjustment means the power of the transmitted pump beam through the polarizing element is adjusted. By changing the polarization of the pump beam behind the polarizing element by the at least second polarization adjustment means the polarization of the pump beam is adjusted.

In a preferred embodiment, the pump laser is a continuous wave laser generating a continuous wave pump laser beam or a pulsed laser generating a pulsed pump laser beam.

In a preferred embodiment, the source is formed as a continuous wave entangled photon source or a pulsed entangled photon source.

In a preferred embodiment, the source is a Sagnac-type entangled photon source, or an entangled photon source with crossed crystals inside a Sagnac loop, or an entangled photon source using a crystal double-pass inside a Sagnac interferometer, or a crossed crystal type entangled photon source, or an entangled photon source with one non-linear element pumped in two directions, or a BBO-type entangled photon source, or a BiBO-type entangled photon source, or a beam-displacer entangled photon source, or a parallel-crystal entangled photon source, or a folded-Mach-Zehnder type entangled photon source, or an entangled photon source based on a linear displacement interferometer, or an entangled photon source using interferometers on each entangled photon individually after creation, or a rail-cross entangled photon source, or a single-crystal single-pass entangled photon source with walk-off compensation, or entangled photon sources using group-velocity-matched non-linear crystals, or entangled photon sources with multi-SPDC interference.

In a preferred embodiment, the transmission of the laser beam can be realized via a free-space channel and/or a fiber channel.

The above and other aspects, features and advantages of the present invention will become more apparent from the following detailed description when taken in conjunction with the accompanying drawings.

### Brief Description of the Drawings:

- Fig. 1:: schematic diagram of a first embodiment of the inventive system for the stabilization of a pump beam with a polarizing monitoring means arranged behind the source;
- Fig. 2:: schematic diagram of another embodiment of Fig. 1 with a polarizing element between the pump laser and the source;
- Fig. 3:: schematic diagram of another embodiment of the inventive system for the stabilization of a pump beam with an isolator as polarizing monitoring means arranged between the pump laser and the source;
- Fig. 4:: schematic diagram of another embodiment of the inventive system for the stabilization of a pump beam with a polarizing monitoring means arranged branching off from the pump beam between the source and the pump laser;
- Fig. 5:: schematic diagram of another embodiment of the inventive system for the stabilization of a pump beam with a two-part polarizing monitoring means arranged between the pump laser and the source.

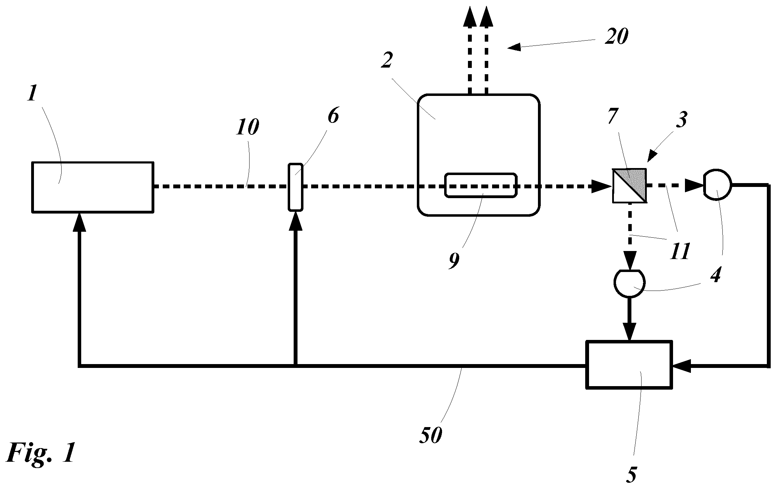

Fig. 1 shows a first embodiment of the inventive system for the stabilization of a pump beam 10 for the generation of entangled photons 20 comprising a pump laser 1 and a source 2.

The pump laser 1 generates the pump beam 10 which is guided to the source 2. The source 2 comprises a non-linear element 9 which is pumped by the pump beam 10 in order to generate the entangled photons 20.

The system comprises in addition a polarizing monitoring means, arranged in the embodiment of Fig. 1 behind the source 2. The pump beam 10 is in this embodiment transmitted through the source for the generation of the entangled photons 20 and then split by the polarizing monitoring means 3 into two part-pump beams 11. The polarizing monitoring means 3 is in the embodiment of Fig. 1 a polarizing beam splitter 7 in order to split the two part-pump beams 11 into two beams with orthogonal polarization.

Behind the two output modes of the polarizing monitoring means 3 two detection means 4 are arranged in order to detect the two part-pump beams 11. **In** the embodiment of Fig. 1 the two detection means 4 are power meters detecting the intensity of the two part-pump beams 11 generating two detection signals proportional to the intensity of the two part-pump beams 11.

The inventive system of Fig. 1 also comprises a control means 5, which receives the detection signals of the two detection means 4. In the control means 5 a control signal is generated by the sum or the ratio of the two detection signals. Thus, the control signal 50 is proportional to the sum or the ratio of the two part-pump beams 11. In the embodiment of Fig. 1 the control signal 50 is sent to the pump laser 1 and/or to a polarization adjustment means 6. A control loop is formed by the pump laser 1 and/or a polarization adjustment means 6 as actuation means, the spatial mode filter means 3, the detection means 4 and the control means 5.

In the embodiment of Fig. 1 the polarization adjustment means 6 is a motorized wave plate or a liquid crystal and is arranged between the pump laser 1 and the source 2 in the beam path of the pump beam 10. The motorized wave plate or a liquid crystal are formed to introduce a controlled polarization rotation of the pump beam 10. The adjustment of the polarization of the pump beam 10 is realized by the control of the one or more wave plates and/or one or more liquid crystals as polarization adjustment means 6 arranged between the pump laser 1 and the source 2 by the control signal 50. For that the control signal 50 generated by the ratio of the two part-pump beams 11 is used. The control signal 50 controls the polarization rotation by the wave plate or the liquid crystal in order to adjust the polarization of the pump beam 10.

In the embodiment of Fig. 1 the control signal 50 generated by the sum of the two part-pump beams 11 is used for the adjustment of the power of the pump beam 10. The adjustment of the power of the pump beam 10 is realized by the control of the pump laser 1 by the control signal 50.

In the embodiment of Fig. 1, for a stabilization of the polarization of the pump beam 10 for example to a horizontal linear polarization, the transmitted part-pump beam 11 has to be maximized while the reflected part-pump beam 11 has to be minimized. In the embodiment of Fig. 1, for a stabilization of the power of the pump beam 10 the sum of both part-pump beams 11 has to be kept stable.

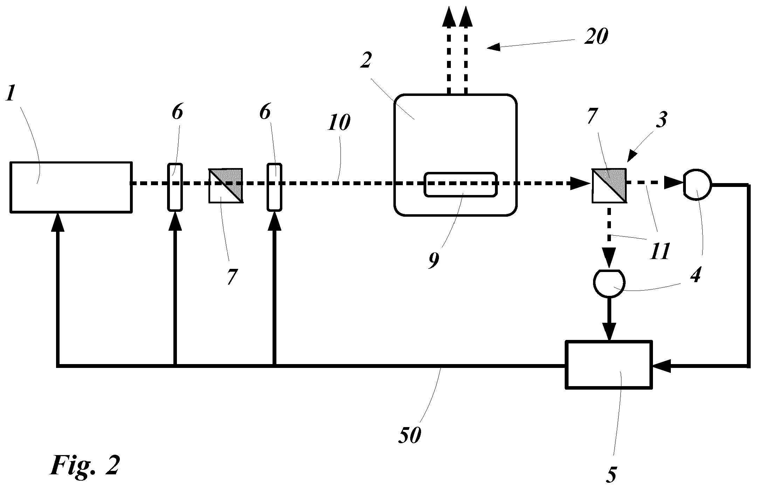

Fig. 2 shows another embodiment of the inventive system of Fig. 1, whereby Fig. 2 differs from Fig. 1 only in that between the pump laser 1 and the polarizing adjustment means 6 from Fig. 1 in front of the source in addition a polarizing beam splitter 7 as a polarizing means is arranged and a second adjustment means 6 between the pump laser 1 and the polarizing beam splitter 7 is arranged. The second adjustment means 6 is in the example of Fig. 2 one or more wave plates and/or one or more liquid crystals.

The pump laser 1 and the first polarization adjustment means 6 in front of the source 2 in Fig. 2 can be used for the adjustment of the polarization and/or the power of the pump beam 10 as described in Fig. 1.

The second adjustment means 6 in Fig. 2 between the pump laser 1 and the polarizing beam splitter 7 can be used in addition for the adjustment of the power of the pump beam 10. For that, the pump laser 1 generates the polarized pump beam 10. Only the horizontal linear polarization part of the pump beam 10 is transmitted through the polarizing beam splitter 7 in Fig. 2. By one or more wave plates and/or one or more liquid crystals as second adjustment means 6 the polarization of the pump beam 10 in front of the polarizing beam splitter 7 can be changed in order to increase or decrease the transmitted part or intensity of the pump beam 10 through the polarizing beam splitter 7, thus controlling the power of the pump beam 10 for the generation of the entangled photons 20.

In the embodiment of Fig. 2, if the power of the pump beam 10 changes, at first the second adjustment means 6 together with the polarizing beam splitter 7 can be controlled for the stabilization of the power of the pump beam 10. If this is not sufficient, in addition the pump laser 1 can be controlled for the stabilization of the power of the pump beam 10.

In the embodiment of Fig. 2, if the polarization of the pump beam 10 changes, the first adjustment means 6 in front of the source 2 can be controlled for the stabilization of the polarization of the pump beam 10.

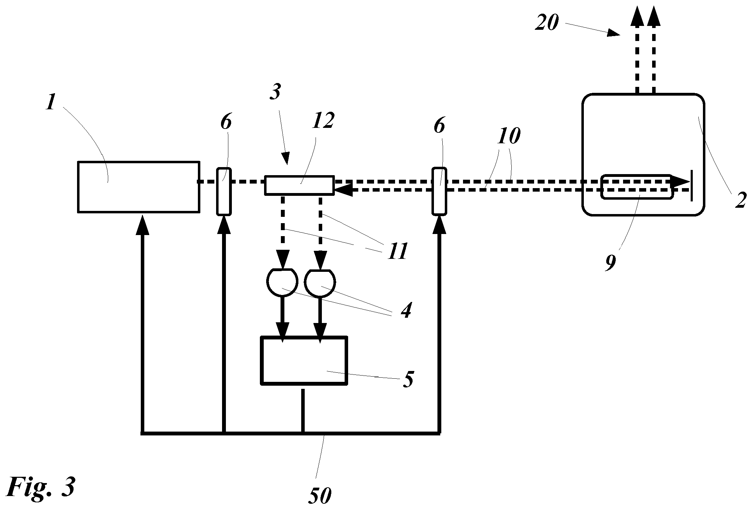

Fig. 3 shows another embodiment of the inventive system for the stabilization of a pump beam, comprising the pump laser 1, the source 2 and the polarizing monitoring means 3, whereby the polarizing monitoring means 3 is arranged in this embodiment between the pump laser 1 and the source 2 in the beam path of the pump beam 10.

In the embodiment of Fig. 3 the pump beam 10 is monitored after the generation of the entangled photons 20 by a reflection or guidance of the beam path 10 in the source 2 back to the pump laser 1. This embodiment can be used for sources 2 guiding the pump beam 10 back towards the pump laser 1, as for example a Sagnac type entangled photon source 2 or a two-direction pumped crystal source.

In the embodiment of Fig. 3 the polarizing monitoring means 3 is formed as an isolator 12. The advantage of the polarizing monitoring means 3 formed as isolator 12 is that the isolator 12 is used for cleaning the polarization of the pump beam 10 by the transmission of the pump beam 10 from the pump laser 1 to the source 2 and in addition it is used in the embodiment of Fig. 3 as polarizing monitoring means 3 with two outputs after the generation of the entangled photons 20. The two detection means 4 are arranged behind the two outputs of the isolator 12 for the pump beam 10 traveling from the source 2 to the pump laser 1.

By using a 2-port Faraday rotator-based isolator 12 the isolator 12 splits the reflected pump beam 10 into two orthogonal part-pump beams 11. As in the embodiment of Fig. 1 the two part-pump beams 11 are detected by the two detection means 4 and used for the generation of the control signal 50.

The embodiment of Fig. 3 comprises two polarization adjustment means 6, the first polarization adjustment means 6 in front of the source 2 and the second polarization adjustment means 6 between the pump laser 1 and the isolator 12.

As in the embodiment of Fig. 1 or 2, the first polarization adjustment means 6 in front of the source 2 in Fig. 3 can be used for the adjustment of the polarization as described for Fig. 1 or 2.

As in the embodiment of Fig. 1 or 2, the pump laser 1 can be used for the adjustment of the power as described for Fig. 1 or 2.

As in the embodiment of Fig. 2, the second adjustment means 6 between the pump laser 1 and the isolator 12 in Fig. 3 can be used for the adjustment of the power of the pump beam 10 as described in Fig. 2. In the embodiment of Fig. 3 the isolator 12 is used instead of the polarizing beam splitter 7.

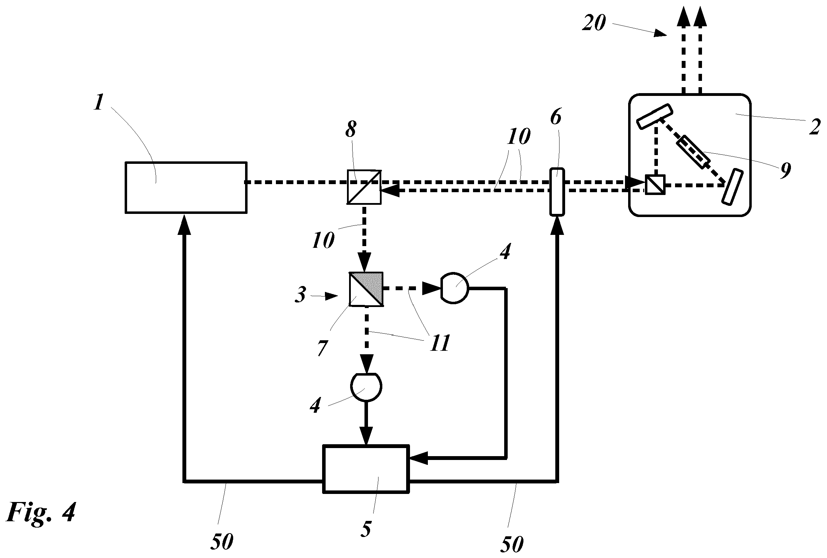

Fig. 4 shows another embodiment of the inventive system whereby Fig. 4 differs from Fig. 1 only in that the polarizing monitoring means 3 is arranged in the embodiment of Fig. 4 branching off from the pump beam 10 between the source 2 and the pump laser 1, and the pump beam 10 is reflected or guided back inside the source 2 towards the pump laser 1 as explained for Fig. 3. As an example, the non-linear element 9 is arranged in Fig. 4 in a Sagnac type source 2.

In order to monitor the pump beam 10 after a reflection in the source 2 in the embodiment of Fig. 4 a beam splitter 8 is arranged between the pump laser 1 and the first polarization adjustment means 6 in front of the source 2.

By the beam splitter 8 a part of the pump beam 10 is reflected and guided to the polarizing monitoring means 3 which is formed in the example of Fig. 4 as polarizing beam splitter 7.

The generation of the control signal 50 and the stabilization of the power and/or the polarization of the pump beam 10 can be realized in the embodiment of Fig. 4 as described for the embodiment of Fig. 1.

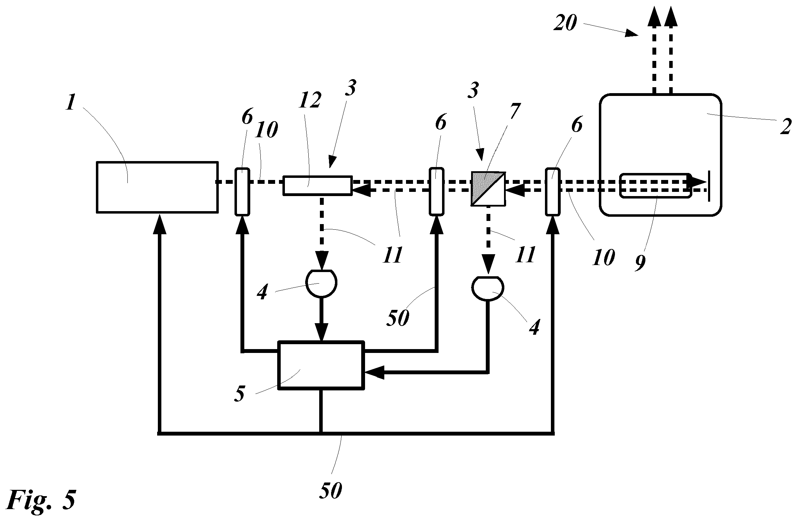

Fig. 5 shows another embodiment of the inventive system whereby Fig. 5 differs from Fig. 3 only in that between the first polarization adjustment means 6 in front of the source 2 and the isolator 12 a first part of the polarizing monitoring means 3 and a third polarization adjustment means 6 is arranged.

In the embodiment of Fig. 5 the polarizing monitoring means 3 comprises a first part formed as polarizing beam splitter 7 and a second part formed as isolator 12. Important is that the output of the isolator 12 is an orthogonal polarization to the output of the polarizing beam splitter 7.

As in the embodiment of Fig. 1 to 4, the first polarization adjustment means 6 in front of the source 2 in Fig. 5 can be used for the adjustment of the polarization as described in Fig. 1 to 4.

As in the embodiment of Fig. 1 to 4, the pump laser 1 in Fig. 5 can be used for the adjustment of the power as described in Fig. 1 to 4.

As in the embodiment of Fig. 2 and 3, the second adjustment means 6 between the pump laser 1 and the isolator 12 in Fig. 5 can be used for the adjustment of the power of the pump beam 10 as described in Fig. 2 and 3. In the embodiment of Fig. 5 the isolator 12 is used instead of the polarizing beam splitter 7.

In addition, in the embodiment of Fig. 5 the third adjustment means 6 formed as one or more wave plates and/or one or more liquid crystals between the isolator 12 and the polarizing beam splitter 7 can be used in addition for the adjustment of the power of the pump beam 10 as described in Fig. 2 and 3 for the second adjustment means 6. This third adjustment means 6 is an optional adjustment means 6. For the adjustment of the power of the pump beam 10 the second adjustment means 6 is sufficient.

### Reference signs:

- 1: pump laser
- 2: source
- 3: polarizing monitoring means
- 4: detection means
- 5: control means
- 6: polarization adjustment means
- 7: polarizing beam splitter
- 8: beam splitter
- 9: non-linear element

- 10: pump beam
- 11: part-pump beam

- 12: isolator

- 20: entangled photons

- 50: control signal

## Claims

1. Method of stabilization of a pump beam (10) for an entangled photon source (2), and preferably for stabilization of the pump beam (10) for the generation of entangled photons (20), with the steps,
i) generation of a polarized pump beam (10) by a pump laser (1);
ii) generation of entangled photons (20) in the source (2) by pumping a non-linear element (9) in the source (2) with the pump beam (10);
**characterized in**
iii) measurement of the pump beam (10) after the generation of the entangled photons (20) by splitting up the pump beam (10) into two part-pump beams (11) with orthogonal polarizations in a polarizing monitoring means (3) and detection of the two part-pump beams (11) by two detection means (4) after the generation of the entangled photons (20);
iv) generation of a control signal (50) based on the sum of the two part-pump beams (11) or on the ratio of the two part-pump beams (11) in a control means (5);
v) adjustment of the pump laser (1), or one or more polarization adjustment means (6) arranged between the pump laser (1) and the source (2) by the control signal (50) in order to stabilize the power and/or the polarization of the pump beam (10),
wherein the control signal (50) of the ratio of the two part-pump beams (11) is used for the adjustment of the polarization of the pump beam (10), and
wherein the control signal (50) of the sum of the two part-pump beams (11) is used for the adjustment of the power of the pump beam (10).

2. Method according to claim 1,
**characterized in that**
the control signal (50) is an electrical signal, preferably whose magnitude is proportional to the measured sum or ratio of the two part-pump beams (11).

3. Method according to one of the claims 1 or 2,
**characterized in that**
the steps i) to v) form a control at or during the generation of the entangled photons (20) by pumping the non-linear element (9) by the pump beam (10).

4. Method according to one of claim 3,
**characterized in that**
the control comprises:
a) the generation of a pump beam (10) in step i),
b) the measurement of the pump beam (10) in step iii) after the generation of the entangled photon pairs in step ii),
c) the generation of a control signal (50) based on the sum of the two part-pump beams (11) or on the ratio of the two part-pump beams (11) in step iv), and
d) the adjustment of the pump laser (1) or one or more adjustment-polarizing means by the control signal (50) in step v).

5. Method according to one of the claims 1 to 4,
**characterized in that**
the control means (5) in step iv) compares the actual value of the sum of the two part-pump beams (11) or the ratio of the two part-pump beams (11) with a setpoint sum value or a setpoint ratio value and the control means (5) determines and generates the control signal (50) on the basis of the comparison.

6. Method according to one of the claims 1 to 5,
**characterized in that**
the two detection means (4) generate a detection signal each in step iii), preferable each detection signal is dependent or proportional to the intensity of one out of the two part-pump beams (11) each.

7. Method according to one of the claims 1 to 6,
**characterized in that**
the pump beam (10) is split up in the polarizing monitoring means (3) after a transmission of the pump beam (10) through the source (2).

8. Method according to one of the claims 1 to 6,
**characterized in that**
the pump beam (10) is split up in the polarizing monitoring means (3) after a reflection of the pump beam (10) in the source (2) or a guidance back of the pump beam (10) in the source (2) towards the pump laser (1).

9. Method according to one of the claims 1 to 8,
**characterized in that**
- the adjustment of the polarization of the pump beam (10) is realized by the control of the pump laser (1), or
- the adjustment of the polarization of the pump beam (10) is realized by the control of one or more polarization adjustment means (6) arranged between the pump laser (1) and the source (2).

10. Method according to one of the claims 1 to 9,
**characterized in that**
- the adjustment of the power of the pump beam (10) is realized by the control of the pump laser (1), or
- the adjustment of the power of the pump beam (10) is realized by the control of the polarization adjustment means (6) arranged between the pump laser (1) and the source (2), or
- the adjustment of the power of the pump beam (10) is realized by the control of multiple polarization adjustment means (6) arranged between the pump laser (1) and the source (2).

11. System for stabilization of a pump beam (10) in an entangled photon source (2), and preferably for stabilization of the pump beam (10) for the generation of entangled photons (20), comprising a pump laser (1) generating a polarized pump beam (10) and a source (2),
whereby the source (2) is arranged behind the pump laser (1) and comprises a non-linear element (9) for the generation of entangled photons (20),
**characterized in that**
- the system comprises a polarizing monitoring means (3) arranged between the pump laser (1) and the source (2) or behind the source (2), whereby the polarizing means comprises two output ports for splitting up the pump beam (10) after the generation of the entangled photons (20) into two part-pump beams (11) with orthogonal polarizations, and
- the system comprises two detection means (4), arranged behind the two output ports of the polarizing monitoring means (3), and
- the system comprises a control means (5) for controlling the power or the polarization of the pump beam (10), whereby a control loop is formed by the pump laser (1) as actuation means, or by one or more polarization adjustment means (6) as actuation means, and the polarizing monitoring means (3), and the detection means (4), and the control means (5), whereby the polarization adjustment means (6) is arranged between the pump laser (1) and the source (2).

12. System according to claim 11,
**characterized in that**
the polarizing monitoring means (3) comprises one or more polarizing beam splitter (7), or one or more isolator.

13. System according to one of the claims 11 or 12,
**characterized in that**
the polarization adjustment means (6) is one or more motorized wave plates, or one or more motorized fiber paddles, or one or more motorized fiber squeezers, or one or more liquid crystals.

## Patentansprüche

1. Verfahren zur Stabilisierung eines Pumpstrahls (10) für eine verschränkte Photonenquelle (2), und vorzugsweise zur Stabilisierung des Pumpstrahls (10) für die Erzeugung verschränkter Photonen (20), mit den Schritten
i) Erzeugung eines polarisierten Pumpstrahls (10) durch einen Pumplaser (1);
ii) Erzeugung von verschränkten Photonen (20) in der Quelle (2) durch Pumpen eines nichtlinearen Elements (9) in der Quelle (2) mit dem Pumpstrahl (10);
**gekennzeichnet durch**
iii) Messung des Pumpstrahls (10) nach der Erzeugung der verschränkten Photonen (20) **durch** Aufspalten des Pumpstrahls (10) in zwei Teilpumpstrahlen (11) mit orthogonalen Polarisationen in einer polarisierenden Überwachungseinrichtung (3) und Erfassung der beiden Teilpumpstrahlen (11) **durch** zwei Erfassungseinrichtungen (4) nach der Erzeugung der verschränkten Photonen (20);
iv) Erzeugung eines Steuersignals (50) auf der Grundlage der Summe der beiden Teilpumpstrahlen (11) oder des Verhältnisses der beiden Teilpumpstrahlen (11) in einer Steuereinrichtung (5);
v) Einstellung des Pumplasers (1) oder eines oder mehrerer Polarisationseinstellmittel (6), die zwischen dem Pumplaser (1) und der Quelle (2) angeordnet sind, **durch** das Steuersignal (50), um die Leistung und/oder die Polarisation des Pumpstrahls (10) zu stabilisieren,
wobei das Steuersignal (50) des Verhältnisses der beiden Teilpumpstrahlen (11) zur Einstellung der Polarisation des Pumpstrahls (10) verwendet wird, und
wobei das Steuersignal (50) der Summe der beiden Teilpumpstrahlen (11) zur Einstellung der Leistung des Pumpstrahls (10) verwendet wird.

2. Verfahren nach Anspruch 1,
**dadurch gekennzeichnet, dass**
das Steuersignal (50) ein elektrisches Signal ist, dessen Größe vorzugsweise proportional zur gemessenen Summe oder zum gemessenen Verhältnis der beiden Teilpumpstrahlen (11) ist.

3. Verfahren nach einem der Ansprüche 1 oder 2,
**dadurch gekennzeichnet, dass**
die Schritte i) bis v) eine Steuerung bei oder während der Erzeugung der verschränkten Photonen (20) durch Pumpen des nichtlinearen Elements (9) durch den Pumpstrahl (10) bilden.

4. Verfahren nach Anspruch 3,
**dadurch gekennzeichnet, dass**
die Steuerung Folgendes aufweist:
a) die Erzeugung eines Pumpstrahls (10) in Schritt i),
b) die Messung des Pumpstrahls (10) in Schritt iii) nach der Erzeugung der verschränkten Photonenpaare in Schritt ii),
c) die Erzeugung eines Steuersignals (50) auf der Grundlage der Summe der beiden Teilpumpstrahlen (11) oder des Verhältnisses der beiden Teilpumpstrahlen (11) in Schritt iv) und
d) die Einstellung des Pumplasers (1) oder eines oder mehrerer Polarisationseinstellmittel durch das Steuersignal (50) in Schritt v).

5. Verfahren nach einem der Ansprüche 1 bis 4,
**dadurch gekennzeichnet, dass**
die Steuereinrichtung (5) in Schritt iv) den Istwert der Summe der beiden Teilpumpstrahlen (11) oder das Verhältnis der beiden Teilpumpstrahlen (11) mit einem Sollsummenwert oder einem Sollverhältniswert vergleicht und die Steuereinrichtung (5) auf der Grundlage des Vergleichs das Steuersignal (50) bestimmt und erzeugt.

6. Verfahren nach einem der Ansprüche 1 bis 5,
**dadurch gekennzeichnet, dass**
die beiden Erfassungseinrichtungen (4) in Schritt iii) jeweils ein Erfassungssignal erzeugen, wobei jedes Erfassungssignal vorzugsweise von der Intensität eines der beiden Teilpumpstrahlen (11) abhängig oder proportional zu dieser ist.

7. Verfahren nach einem der Ansprüche 1 bis 6,
**dadurch gekennzeichnet, dass**
der Pumpstrahl (10) in der Polarisationsüberwachungseinrichtung (3) nach einer Übertragung des Pumpstrahls (10) durch die Quelle (2) aufgeteilt wird.

8. Verfahren nach einem der Ansprüche 1 bis 6,
**dadurch gekennzeichnet, dass**
der Pumpstrahl (10) in der Polarisationsüberwachungseinrichtung (3) nach einer Reflexion des Pumpstrahls (10) in der Quelle (2) oder einer Rückführung des Pumpstrahls (10) in der Quelle (2) zum Pumplaser (1) aufgeteilt wird.

9. Verfahren nach einem der Ansprüche 1 bis 8,
**dadurch gekennzeichnet, dass**
- die Einstellung der Polarisation des Pumpstrahls (10) durch die Steuerung des Pumplasers (1) realisiert wird, oder
- die Einstellung der Polarisation des Pumpstrahls (10) durch die Steuerung einer oder mehrerer Polarisationseinstellmittel (6) realisiert wird, die zwischen dem Pumplaser (1) und der Quelle (2) angeordnet sind.

10. Verfahren nach einem der Ansprüche 1 bis 9,
**dadurch gekennzeichnet, dass**
- die Einstellung der Leistung des Pumpstrahls (10) durch die Steuerung des Pumplasers (1) realisiert wird, oder
- die Einstellung der Leistung des Pumpstrahls (10) durch die Steuerung des zwischen dem Pumplaser (1) und der Quelle (2) angeordneten Polarisationseinstellmittels (6) erfolgt, oder
- die Einstellung der Leistung des Pumpstrahls (10) durch die Steuerung mehrerer zwischen dem Pumplaser (1) und der Quelle (2) angeordneter Polarisationseinstellmittel (6) erfolgt.

11. System zur Stabilisierung eines Pumpstrahls (10) in einer verschränkten Photonenquelle (2), vorzugsweise zur Stabilisierung des Pumpstrahls (10) für die Erzeugung verschränkter Photonen (20), das einen Pump-Laser (1), der einen polarisierten Pumpstrahl (10) erzeugt, und eine Quelle (2) aufweist,
wobei die Quelle (2) hinter dem Pumplaser (1) angeordnet ist und ein nichtlineares Element (9) zur Erzeugung von verschränkten Photonen (20) aufweist,
**dadurch gekennzeichnet, dass**
- das System eine Polarisationsüberwachungseinrichtung (3) aufweist, die zwischen dem Pumplaser (1) und der Quelle (2) oder hinter der Quelle (2) angeordnet ist, wobei die Polarisationseinrichtung zwei Ausgangsöffnungen aufweist, um den Pumpstrahl (10) nach der Erzeugung der verschränkten Photonen (20) in zwei Teilpumpstrahlen (11) mit orthogonalen Polarisationen aufzuteilen, und
- das System zwei Erfassungseinrichtungen (4) aufweist, die hinter den beiden Ausgangsöffnungen der Polarisationsüberwachungseinrichtung (3) angeordnet sind, und
- das System eine Steuereinrichtung (5) zum Steuern der Leistung oder der Polarisation des Pumpstrahls (10) aufweist, wobei eine Steuerschleife durch den Pumplaser (1) als Betätigungseinrichtung oder durch ein oder mehrere Polarisationseinstellmittel (6) als Betätigungseinrichtung, und die Polarisationsüberwachungseinrichtung (3) und die Erfassungseinrichtung (4) und das Steuermittel (5) gebildet wird, wobei das Polarisationseinstellmittel (6) zwischen dem Pumplaser (1) und der Quelle (2) angeordnet ist.

12. System nach Anspruch 11,
**dadurch gekennzeichnet, dass**
die Polarisationsüberwachungseinrichtung (3) einen oder mehrere polarisierende Strahlteiler (7) oder einen oder mehrere Isolatoren aufweist.

13. System nach einem der Ansprüche 11 oder 12,
**dadurch gekennzeichnet, dass**
das Polarisationseinstellmittel (6) eine oder mehrere motorisierte Wellenplatten oder eine oder mehrere motorisierte Faserpaddel oder eine oder mehrere motorisierte Faserklemmvorrichtungen oder eine oder mehrere Flüssigkristalle aufweist.

## Revendications

1. Procédé de stabilisation d'un faisceau de pompage (10) pour une source de photons enchevêtrés (2), et de préférence de stabilisation du faisceau de pompage (10) pour la génération de photos enchevêtrées (20), comprenant les étapes consistant à :
i) générer un faisceau de pompage polarisé (10) via un laser de pompage (1) ;
ii) générer des photons enchevêtrés (20) dans la source (2) en pompant un élément non linéaire (9) dans la source (2) avec le faisceau de pompage (10) ;
**caractérisé par les étapes consistant à** :
iii) mesurer le faisceau de pompage (10) après la génération des photons enchevêtrés (20) en divisant le faisceau de pompage (10) en deux faisceaux de pompage partiel (11) avec des polarisations orthogonales dans un moyen de surveillance de polarisation (3), et détecter les deux faisceaux de pompage partiel (11) via deux moyens de détection (4) après la génération des photons enchevêtrés (20) ;
iv) générer un signal de commande (50) sur la base de la somme des deux faisceaux de pompage partiel (11) ou du rapport des deux faisceaux de pompage partiel (11) dans un moyen de commande (5) ;
v) ajuster le laser de pompage (1), ou un ou plusieurs moyens d'ajustement de polarisation (6) agencés entre le laser de pompage (1) et la source (2) via le signal de commande (50) afin de stabiliser la puissance et/ou la polarisation du faisceau de pompage (10),
dans lequel le signal de commande (50) du rapport des deux faisceaux de pompage partiel (11) est utilisé pour l'ajustement de la polarisation du faisceau de pompage (10), et
dans lequel le signal de commande (50) de la somme des deux faisceaux de pompage partiel (11) est utilisé pour l'ajustement de la puissance du faisceau de pompage (10).

2. Procédé selon la revendication 1,
**caractérisé en ce que**
le signal de commande (50) est un signal électrique, de préférence dont une amplitude est proportionnelle à la somme ou au rapport mesurés des deux faisceaux de pompage partiel (11).

3. Procédé selon l'une des revendications 1 ou 2,
**caractérisé en ce que**
les étapes i) à v) forment une commande au moment de ou pendant la génération des photons enchevêtrés (20) en pompant l'élément non linéaire (9) via le faisceau de pompage (10).

4. Procédé selon la revendication 3 ,
**caractérisé en ce que**
la commande comprend :
a) la génération d'un faisceau de pompage (10) dans l'étape 1),
b) le mesurage du faisceau de pompage (10) dans l'étape iii) après la génération de la paire de photons enchevêtrés dans l'étape ii),
c) la génération d'un signal de commande (50) sur la base de la somme des deux faisceaux de pompage partiel (11) ou du rapport des deux faisceaux de pompage partiel (11) dans l'étape iv), et
d) l'ajustement du laser de pompage (1) ou d'un ou de plusieurs moyens de polarisation d'ajustement via le signal de commande (50) dans l'étape v).

5. Procédé selon l'une des revendications 1 à 4,
**caractérisé en ce que**
le moyen de commande (5) dans l'étape iv) compare la valeur actuelle de la somme des deux faisceaux de pompage partiel (11) ou du rapport des deux faisceaux de pompage partiel (11) à une valeur de somme de consigne ou à une valeur de rapport de consigne, et le moyen de commande (5) détermine et génère le signal de commande (50) sur la base de la comparaison.

6. Procédé selon l'une des revendications 1 à 5,
**caractérisé en ce que**
les deux moyens de détection (4) génèrent chacun un signal de détection dans l'étape iii), de préférence chaque signal de détection dépend de ou est proportionnel à l'intensité d'un faisceau parmi les deux faisceaux de pompage partiel (11) chacun.

7. Procédé selon l'une des revendications 1 à 6,
**caractérisé en ce que**
le faisceau de pompage (10) est divisé dans le moyen de surveillance de polarisation (3) après une transmission du faisceau de pompage (10) à travers la source (2).

8. Procédé selon l'une des revendications 1 à 6,
**caractérisé en ce que**
le faisceau de pompage (10) est divisé dans le moyen de surveillance de polarisation (3) après une réflexion du faisceau de pompage (10) dans la source (2) ou un guidage retour du faisceau de pompage (10) dans la source (2) vers le laser de pompage (1).

9. Procédé selon l'une des revendications 1 à 8,
**caractérisé en ce que**
- l'ajustement de la polarisation du faisceau de pompage (10) est réalisé via la commande du laser de pompage (1), ou
- l'ajustement de la polarisation du faisceau de pompage (10) est réalisé via la commande d'un ou de plusieurs moyens d'ajustement de polarisation (6) agencés entre le laser de pompage (1) et la source (2).

10. Procédé selon l'une des revendications 1 à 9,
**caractérisé en ce que**
- l'ajustement de la puissance du faisceau de pompage (10) est réalisé via la commande du laser de pompage (1), ou
- l'ajustement de la puissance du faisceau de pompage (10) est réalisé via la commande du moyen d'ajustement de polarisation (6) agencé entre le laser de pompage (1) et la source (2), ou
- l'ajustement de la puissance du faisceau de pompage (10) est réalisé via la commande de multiples moyens d'ajustement de polarisation (6) agencés entre le laser de pompage (1) et la source (2).

11. Système de stabilisation d'un faisceau de pompage (10) dans une source de photons enchevêtrés (2), et de préférence de stabilisation du faisceau de pompage (10) pour la génération de photons enchevêtrés (20), comprenant un laser de pompage (1) qui génère un faisceau de pompage polarisé (10) et une source (2), la source (2) étant agencée derrière le laser de pompage (1) et comprenant un élément non linéaire (9) pour la génération de photons enchevêtrés (20),
**caractérisé en ce que**
- le système comprend un moyen de surveillance de polarisation (3) agencé entre le laser de pompage (1) et la source (2) ou derrière la source (2), le moyen de polarisation comprenant deux orifices de sortie destinés à diviser le faisceau de pompage (10) après la génération des photons enchevêtrés (20) en deux faisceaux de pompage partiel (11) avec des polarisations orthogonales, et
- le système comprend deux moyens de détection (4), agencés derrière les deux orifices de sortie du moyen de surveillance de polarisation (3), et
- le système comprend un moyen de commande (5) destiné à commander la puissance ou la polarisation du faisceau de pompage (10), une boucle de commande étant formée par le laser de pompage (1) en tant que moyen d'actionnement, ou par un ou plusieurs moyens d'ajustement de polarisation (6) en tant que moyens d'actionnement, et le moyen de surveillance de polarisation (3), et le moyen de détection (4), et le moyen de commande (5), le moyen d'ajustement de polarisation (6) étant agencé entre le laser de pompage (1) et la source (2).

12. Système selon la revendication 11,
**caractérisé en ce que**
le moyen de surveillance de polarisation (3) comprend un ou plusieurs séparateurs de faisceau de polarisation (7), ou un ou plusieurs isolants.

13. Système selon l'une des revendications 11 ou 12,
**caractérisé en ce que**
le moyen d'ajustement de polarisation (6) est une ou plusieurs plaques à ondes motorisées, ou une ou plusieurs palettes à fibres motorisées, ou une ou plusieurs presses à fibres motorisées, ou un ou plusieurs cristaux liquides.
